(19) **Europäisches Patentamt / European Patent Office / Office européen des brevets**

(11) **EP 0 982 712 B1**

(12) # EUROPEAN PATENT SPECIFICATION

(45) Date of publication and mention
of the grant of the patent:
**26.09.2007 Bulletin 2007/39**

(51) Int Cl.:
*G10L 15/26* (2006.01)    *G10L 15/18* (2006.01)
*G06F 17/27* (2006.01)

(21) Application number: **99115706.6**

(22) Date of filing: **05.08.1999**

(54) **Segmentation technique increasing the active vocabulary of speech recognizers**

Segmentierungsverfahren zur Erweiterung des aktiven Vokabulars von Spracherkennern

Technique de segmentation pour l'augmentation du vocabulaire de dispositifs de reconnaissance de la parole

(84) Designated Contracting States:
**AT BE CH CY DE DK ES FI FR GB GR IE IT LI LU MC NL PT SE**

(30) Priority: **28.08.1998 EP 98116278**

(43) Date of publication of application:
**01.03.2000 Bulletin 2000/09**

(73) Proprietor: **International Business Machines Corporation
Armonk, NY 10504 (US)**

(72) Inventors:
• **Emam, Ossama, Dr.
Giza (EG)**
• **Kunzmann, Siegfried, Dr.
69126 Heidelberg (DE)**

(74) Representative: **Duscher, Reinhard
IBM Deutschland GmbH
Intellectual Property
Pascalstrasse 100
70548 Stuttgart (DE)**

(56) References cited:
**DE-A- 19 721 198**

• **GEUTNER P: "USING MORPHOLOGY TOWARDS BETTER LARGE-VOCABULARY SPEECH RECOGNITIONSYSTEMS" PROCEEDINGS OF THE INTERNATIONAL CONFERENCE ON ACOUSTICS, SPEECH, AND SIGNAL PROCESSING (ICASSP),US,NEW YORK, IEEE, 9 May 1995 (1995-05-09), pages 445-448, XP000658026 ISBN: 0-7803-2432-3**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

**1 Background of the Invention**

**1.1 Field of the Invention**

The present invention relates to a speech recognition system and a method executed by a speech recognition system.
More particularly, the invention relates to the vocabulary of a speech recognition system and its usage during the speech recognition process.

**1.2 Description and Disadvantages of Prior Art**

The invention is based on the IBM ViaVoice 98 speech recognition system developed by the applicant. IBM ViaVoice 98 is a real time speech recognition system for large vocabularies which can be speaker-trained with little cost to the user.

The starting point in these known systems is the breakdown of the speech recognition process into a part based on acoustic data (**decoding**) and a language statistics part referring back to bodies of language or text for a specific area of application (**language model**). The decision on candidate words is thus derived both from a decoder and a model language probability. For the user, the fitting of the vocabulary processed by this recognition system, to the specific field or even to individual requirements, is of particular significance.

With this speech recognition system the acoustic decoding first supplies hypothetical words. The further evaluation of competing hypothetical words is then based on the language model. This represents estimates of word string frequencies obtained from application-specific bodies of text based on a collection of text samples from a desired field of application. From these text samples are generated the most frequent forms of words and statistics on word sequences.

In the method used here for estimating the frequency of sequences of words the frequency of occurrence of the so-called word form trigrams in a given text are estimated. In known speech recognition systems the so-called Hidden-Markov-Model is frequently used for estimating the probabilities. Here, several frequencies observed in the text are set down. For a trigram "uvw" these are a nullgram term $f_0$, a unigram term $f(w)$, a bigram term $f(wv)$ and a trigram term $f(wuv)$. These terms correspond to the relative frequencies observed in the text, where the nullgram term has only a corrective significance.

If these terms are interpreted as probabilities of the word w under various conditions, a so-called latent variable can be added, from which one of the four conditions which produce the word w is achieved by substitution. If the transfer probabilities for the corresponding term are designated $\lambda_0\ \lambda_1\ \lambda_2\ \lambda_3$, then we obtain the following expression for the trigram probability sought

$$\mathrm{Pr}(wuv) = \lambda_0 f_0 + \lambda_1 f(w) + \lambda_2 f(wv) + \lambda_3 f(wuv)$$

The known speech recognition systems have the disadvantage that each word appears as a word form in the vocabulary of the system. For this reason there are relatively large demands on the memory capacity of the system. The generally very extensive vocabularies also have a disadvantageous effect on the speed of the recognition process.

Typical speech recognition systems are working in real-time on today's PCs. They have an active vocabulary of up to and exceeding 60 thousands words, can recognize continuously and /or naturally spoken input without the need to adapt the system to specific characteristics of a speaker. S. Kunzmann; "VoiceType: A Multi-Lingual, Large Vocabulary Speech Recognition System for a PC", Proceedings of the 2nd SQEL Workshop, Pilsen, April 27-29, 1997, ISBN 80-7082-314-3) gives an outline on these aspects. Given the actual vocabulary used in human communication the order of magnitude of the vocabulary recognized by computer-based speech recognition systems must actually reach 100000s to several millions of words. Even if such large vocabulary sizes would be available today beside algorithmic limitations on recognizing these extremely large vocabulary sizes issues like recognition accuracy, decoding speed and system resources (CPU, memory, disc) play a major role for classifying real-time speech recognition systems.

In the past several approaches have been suggested to increase the size of the active vocabulary for such recognition systems. In particular such state of the art approaches are related to the handling of compound words.

The German patent for instance DE 19510083 C2 assumes that the compound words e.g. German "Fahrbahn-schalter" or "vorgehen" are decomposed in constituents like "Fahrbahn-schalter" or "vorgehen". The assumption is that composita are split in constituents which are a sequences of legal words in the German language as well as in the recognition vocabulary ("Fahrbahn", "Schalter" and "vor", "gehen"). For each of these words statistics are computed, describing the most likely frequencies of each word (Fahrbahnschalter, vorgehen) in their context of occurrence e.g. "Der Fahrbahnschalter ist geschlossen". In addition separate frequency statistics are computed which describe the sequence of these constituents within compound words. Both statistical models are used to decide if the individual constituents are displayed to the user as single words or as compound word. Cases like "Verfügbarkeit" (constituents: "verfügbar" + "keit") or "Birnen" (constituents: "Birne" + "n") are not covered sincs "keit" and "n" are neither legal (standalone) words nor syllables in the German language, thus it's not contained within the recognition vocabulary. According to this teaching an additional, separate frequency model is required to allow the resolving of problems of illegal word sequences during recombination of these arbitrary constituents into words (e.g. "vor"-"Verfügbar").

The recent US patent US 5,754,972 teaches the introduction of a special dictation mode where the user either announces a "compound dictation mode" or the system is switched into a special recognition mode. This is exposed to the user by a specific user interface. In languages like German the occurrence of compound words is extremely frequent, so the need to switch towards specific dictation modes is extremely cumbersome. In addition the teaching of US 5,754,972 is based on the same fundamental assumption as German patent DE 19510083 C2: compound words can be built only on constituents representing legal words of the vocabulary by their own. To support the generation of new compound words the spelling of the characters of the compound word is introduced within this special dictation mode.

A different approach is disclosed by G. Ruske, "Half words as processing units in automatic speech recognition", Journal "Sprache und Datenverarbeitung", Vol. 8, 1984, Part 1/2, pp. 5-16. A word of the recognition vocabulary is usually described via it's orthography (spelling) and it's associated (multiple) pronunciations via smallest recognition units. The recognition units are the smallest recognizable units for the decoder. G. Ruske defines these recognition units based on a set of syllables (around 5000 in German). To each spelling of the vocabulary a sequence of syllables describes the pronunciation(s) of each individual word. Thus according to the teaching of Ruske words of the vocabulary are set up by the recognition units of the decoder being identical to the syllables according to the pronunciation of the word in that language. Therefore the recombination of constituents to build words of the language is thus limited to the recognition units of the decoder.

The German patent application DE 19721198 A1 teaches the construction of a language model by splitting words into stems and endings, because languages, including Slavonic and Japanese languages, are characterized by the use of inflection, and the size of vocabularies in these languages is very large. The vocabulary in DE 19721198 A1 consists of stems and endings for compressing it to a manageable size. One method proposed in DE 19721198 A1 for splitting a word of the form "WORD = PREFIX ROOT SUFFIX END" into a stem and an ending is setting "STEM = PREFIX+ROOT" and "ENDING = SUFFIX+END". Another method proposed in DE 19721198 A1 for splitting a word into stem and ending is based on a given vocabulary and list of endings. Each word is matched against endings and the longest possible ending from the list is cut from the word resulting in the stem of said word:
Thus DE 19721198 A1 teaches the building of language models that fully incorporate the morphological features.

P. Geutner discusses decomposition methods originally based on morphological decomposition of the German language in "Using morphology towards better large-vocabulary speech recognition systems", Proceedings of the International Conference on Acoustics, Speech, and Signal Processing (ICASSP), US, New York, IEEE, 9 May 1995, pages 445-448.

**1.3 Objective of the Invention**

The invention is based on the objective to provide a technology to increase the size of an active vocabulary recognized by speech recognition systems. It is a further objective of the current invention to reduce at the same time the algorithmic limitations on recognizing such extremely large vocabulary sizes for instance in terms of recognition accuracy, decoding speed and system resources (CPU, memory, disc), and thus to play a major role in classifying real-time speech recognition systems.

**2 Summary and Advantages of the Invention**

The objective of the invention is solved by the independent claim 1.
The invention teaches a speech-recognition-system for recognition of spoken speech of a language comprising a segmented vocabulary. Said vocabulary comprising a multitude of entries and an entry being either identical to a legal word of said language, or an entry being a constituent of a legal word of said language. A constituent can be an arbitrary subcomponent of said legal word according to the orthography. Said constituent is not limited to a syllable of said legal word or to a recognition-unit of said speech-recognition-system.

The technique proposed by the current invention allows for a significant compression of a vocabulary. The invention allows to define and store N words but generate and recognize up to MxN words (where M is language dependent) as combinations of the vocabulary entries.

Smaller vocabularies allow in addition a better estimation of the word (or piece) probabilities (uni-, bi-, tri-grams within their context environment as more occurrences are seen in the respective corpora.

Efficient storing is achieved via mapping the N words into a set of groups having the same pattern of constituents. Such an approach ensures logical completeness and coverage of the chosen vocabulary. Usually the user who dictates a word defined in the vocabulary expects that all derived forms are also available. For example, one don't expect that the word 'use' is in the vocabulary while 'user' is not.

Complete flexibility (as with the current teaching) in defining the constituent sets for each language makes it possible to achieve the best compression. The constituents are not necessarily a linguistic or phonetic known unit of the language.

Additional advantages are accomplished by said vocabulary defining legal words of said language recognizable by said speech-recognition-system either by an entry itself or by recombination of up to S entries in combination representing a legal word of said language. The invention suggests S being the number 2 or 3.

As any number of constituents can be used for recombination of legal words the compression rate of such a segmented vocabulary can be very large. On the other hand the compression rate and the algorithmic complexity for recombination are antagonistic properties of the proposed speech recognition system. To limit the number of segments to recombine constituents into legal words to S=2 or S=3 is an effective compromise.

According to the proposed invention the speech-recognition-system, if based on a segmented vocabulary, comprises, if S is 2, constituents allowing for recombination of legal words from a prefix-constituent and a core-constituent, or from a core-constituent and a suffix-constituent, or from a prefix-constituent and a suffix-constituent. In addition said vocabulary comprises, if S is 3, constituents allowing for recombination of legal words from a prefix-constituent, a core-constituent and a suffix-constituent.

By distinguishing different types of constituents properties of the individual languages can be reflected since typically not every constituent type can be recombined with any other constituent type. This approach simplifies the recognition process and eases the determination of recognition errors.

According to the proposed invention a constituent combination table is taught. It indicates which concatenations of said constituents are legal concatenations in said language.

Such constituent combination tables are performance and storage efficient means to define which constituent may be recombined with other constituents resulting in a legal constituent or legal word of said language.

According to the proposed invention said constituent combination table comprises in the case of S=2 or S=3 a core-prefix-matrix indicating, whether a combination of a prefix-constituent and a core-constituent is a legal combination in said language or not; and/or a prefix-suffix-matrix indicating, whether a combination of a prefix-constituent and a suffix-constituent is a legal combination in said language or not; and/or a prefix-prefix-matrix indicating, whether a combination of a first-prefix-constituent and a second-prefix-constituent is a legal combination in said language building a third-prefix-constituent or not; and/or a core-suffix-matrix indicating, whether a combination of a core-constituent and a suffix-constituent is a legal combination in said language or not.

The approach to reduce the question of legal recombinations to a sequence of decisions involving only two constituents reduces computation effort. Moreover introduction of a collection of constituent combination tables depending on the types of constituents to be recombined increases efficiency of the recombination process. Depending on the type of constituents for certain cases no legal combination is possible and thus no table access has to be performed. Also in terms of access and storage requirements it is more efficient to exploit a larger number of smaller tables than only a few larger tables.

According to a further embodiment of the proposed invention said core-prefix-matrix and/or said core-suffix-matrix and/or said prefix-suffix-matrix and/or said prefix-prefix-matrix have a structure wherein said core-constituents, said prefix-constituents and said suffix-constituents are represented by unique numbers which form the indexes of said matrixes.

By encoding the various constituents as unique numbers and by setting up the various constituent combination tables based on these numbers the complete recombination and recognition process is accelerated as no translations between constituents and there encodings are required anymore.

According to the proposed invention a separate post-processor is suggested responsive to an input comprising recognized constituents of said vocabulary. Said post-processor recombines said constituents into legal words of said language exploiting said constituent combination table.

Implementing the recombination of constituents into a separate post-processor has the advantage that the teaching of the current invention can be applied to any existing speech recognition system without further modification or enhancements. If recombination is done in a post-processor the statistic correlation information of the language model has been exploited already when the post-processor becomes active. Thus the reliability of the recognized constituents is already high when inputed to the post-processor and will be increased further by said post-processing.

The proposed invention relates to details of the recombination. Several cases can be distinguished. Said post-processor is responsive to two consecutive constituents representing a first prefix-constituent and a second prefix-constituent and recombines said first prefix-constituent and said second prefix-constituent into a third prefix-constituent if said prefix-prefix-matrix is indicating said first prefix-constituent and said second prefix-constituent as a legal combination in said language. If said prefix-prefix-matrix indicates said first prefix-constituent and said second prefix-constituent as an illegal combination in said language said first prefix-constituent is dropped.

Said post-processor is responsive to two consecutive constituents representing a prefix-constituent and a core-constituent and recombines said prefix-constituent and said core-constituent into a second core-constituent if said core-prefix-matrix is indicating said prefix-constituent and said core-constituent as a legal combination in said language. If said core-prefix-matrix indicates said prefix-constituent and said core-constituent as an illegal combination in said language, it replaces said prefix-constituent with an alternative prefix-constituent and recombines said alternative prefix-constituent and said core-constituent if said core-prefix-matrix is indicating said alternative prefix-constituent and said core-constituent as a legal combination in said language.

Said post-processor is responsive to two consecutive constituents representing a prefix-constituent and a suffix-constituent and recombines said prefix-constituent and said suffix-constituent into a second prefix-constituent if said prefix-suffix-matrix is indicating said prefix-constituent and said suffix-constituent as a legal combination in said language.

Said post-processor is responsive to two consecutive constituents representing a core-constituent and a suffix-constituent and recombines said core-constituent and said suffix-constituent into a second core-constituent if said core-suffix-matrix is indicating said core-constituent and said suffix-constituent as a legal combination in said language.

Besides recombining constituents these features offer the advantages of detecting and also in a certain extend of correcting recognition errors.

According to a further embodiment of the proposed invention said prefix-constituent and said suffix-constituent are not recombined and said prefix-constituent is treated as a separate entry if said prefix-suffix-matrix is indicating said prefix-constituent and said suffix-constituent as an illegal combination in said language. Moreover said core-constituent and said suffix-constituent are not recombined and said core-constituent is treated as a separate entry if said core-suffix-matrix is indicating said core-constituent and said suffix-constituent as an illegal combination in said language.

This invention feature allows for determination of word boundaries.

According to the proposed invention said alternative prefix-constituent is retrieved from an alternative-list comprising alternative prefix-constituents to said prefix-constituents in decreasing matching probability.

Such an approach further increases recognition accuracy.

The objective of the invention is also solved by the independent method claim 7. Further embodiments of the proposed invention are suggested in the dependent claims of claim 7.

For the feature details it is referred to the claims. The features are in tight correspondence to the device claims. As far as the advantages are concerned above statements relating to the claimed device are also applicable.

### 3 Brief Description of the Drawings

Figure 1     is a diagram reflecting the structure of the split-tables according to the current invention, modelling how legal words of a language are decomposed into constituents which then become part of the segmented vocabulary.

Figure 2     visualizes the steps according to the state of the art teaching to compute a language model (LM) for the speech recognizer.

Figure 3     visualizes the steps according the current invention to compute a language model (LM) for the speech recognizer based on the segmented vocabulary.

Figure 4     visualizes by example how a small segmented vocabulary allows to support the recognition of a rich set of legal words of a language by recombination of constituents.

Figure 5     is a block diagram reflecting the structure of a state of the art decoder of a speech recognizer.

Figure 6     is a block diagram reflecting the structure of a decoder of a speech recognizer according to the current teaching visualizing the new post-processor.

Figure 7     visualizes two examples of constituent combination tables, a core-prefix-matrix and a prefix-prefix-matrix.

Figure 8     depicts in form of a flow-diagram the exploitation of the core-prefix-matrix and the prefix-prefix-matrix during the execution of the post-processor.

### 4 Description of the Preferred Embodiment

If the current specification is referring to a certain natural language for outlining certain inventive features this has to be understood as an example only. The inventive technology itself is applicable to any type of natural language.

The current specification is based on the IBM ViaVoice 98 speech recognition system. The invention is not limited to this specific speech recognition system, it applies to other speech recognition systems as well.

**4.1 Introduction**

A **Speech Recognizer** is a device which automatically transcribes speech into text. It can be thought of as a voice activated "typewriter" in which the transcription is carried out by a computer program and the transcribed text appears on a workstation display.

For the purpose of this invention, the designation **word** denotes a <u>word form</u> defined by its spelling. Two differently spelled inflections or derivations of the same stem are considered different words (example: work, works, workers, ...). Homographs having different parts of speech or meaning constitute the same word.

The list of words that are chosen for a dictation task is called **vocabulary**. It is finite, pre-defined and constitutes the words that can be "printed" out by the speech recognizer.

For each word (according to the spelling) in the vocabulary, there is a phonetic description of the way(s) this word could be uttered; this is called the **pronunciation** of that word. One word (according to its spelling) can have more than one pronunciation.

A **Language Model (LM)** is a conceptual device which, given a string of past words, provides an estimate of the probability that any given word from an allowed vocabulary will follow the string i.e. $P(W_k/W_{k-1}, .......W_1)$. In speech recognition, a LM is used to direct the hypothesis search for the sentence that was spoken. For reasons of estimation as well as estimate storage, past strings which the prediction is based on, are partitioned into a manageable number of n words. In a 3-gram LM, the prediction of a word depends on the past two words. The probability is derived from the uni-grams bi-grams and tri-grams counts according to the following mathematical formula,

$$P(w_3 / w_1 w_2) = h_3 \frac{C_{123}}{C_{12}} + h_2 \frac{C_{23}}{C_2} + h_1 \frac{C_3}{N} + h_0$$

where $C_x$, counts of word x, $C_{xy}$, counts of occurrence of word x followed by word y, $C_{xyz}$ counts of occurrence of the sequence word x y z, $h_x$ are weighting factors to combine the context information probabilities.

The training **corpus** is the text data coming from various sources to be used in counting the statistics to build the LM.

**4.2 The Solution**

The following invention relates to the recognition of spoken speech and solves problems relative to limited vocabulary size defined / known to speech recognition systems.

The current invention is based on the fundamental idea to increase the size of <u>recognizable</u> words stored within the vocabulary not by the straightforward approach of just storing further complete legal words of the language and thus increasing the vocabulary size. The invention instead suggests to create a vocabulary consisting of a mixture of complete legal words of the language and of <u>constituents</u> of legal words of the language. By providing constituent combination tables indicating, which recombinations of the constituents form legal words of the language, the recognition process of the speech recognizer is able to identify an increased size of recognizable words of that language forming the active vocabulary. In the subsequent specification methods are being described allowing to use <u>arbitrary constituents</u> within the active recognition vocabulary. The current teaching allows to form constituents from any number of characters; constituents even with one character only are possible. Constituents also are not limited to specific relations to the recognition units of the decoder. Consitutents according to the current invention are denoted as prefix or suffix (e.g. suffix "n" to denote Pluralisation of nouns) or cores. In addition the current invention does not require to compute an additional, separate frequency model to allow the resolving of problems of illegal word sequences during recombination of these arbitrary constituents into words (e.g. "vor"-"Verfügbar") thus saving quite some disk space and decoding overhead (minimizing alternate paths evaluation). The current teaching may be applied to segmentation and recombination of any number S of constituents. For efficiency reasons using a smaller number of constituents, for example S=2 or S=3, turned out to be advantageous.

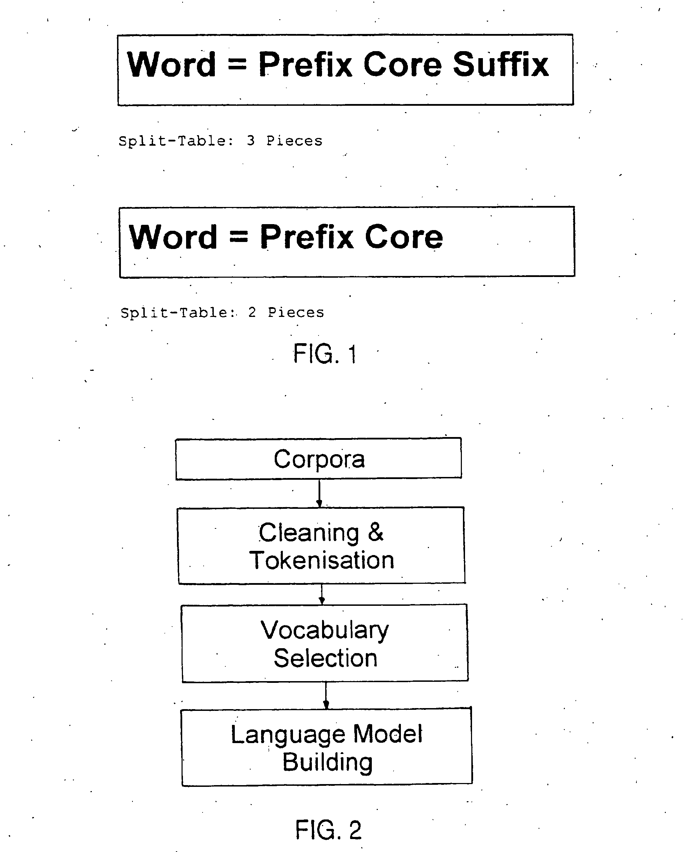

The following specification will refer to **prefix-core** segmentation as 2-pieces and to **prefix-core-suffix** segmentation as 3-pieces. Fig. 1 visualizes the structure of the **split-tables** showing how legal words in a language are split or recombined by constituents. The split-tables contain the word splitting information (either into 2 pieces or 3 or even more). How to obtain this table will be explained below.

Assuming for a given language that a split table is obtained where the number of the original words (non-split) is much higher than the number of cores plus the set of prefixes and suffixes (pieces). The main idea then is to make use of this to define to the recognizer a vocabulary of pieces, recognize during run-time the pieces and display on the screen the original word after concatenating the pieces that constitute this word.

Moreover the current invention does not expose to the user at any time the special handling of compound words and/or words preceded or followed but a set of prefixes/suffixes and specific dictation modi for compound word handling has to be introduced.

The current invention suggests to use phonemes as the smallest recognizable unit for the decoder process. Thus each entry of the increased vocabulary is consisting of a spelling (which can be an <u>arbitrary</u> constituent) and associated phones to identify allowable pronunciations. On this background if the current disclosure makes use of the term "**syllables**" it has to be understood as potential prefix or suffix of words (German: "vor", "keit", Arabic: "uuna") to imply a set of characters on <u>orthographic</u> level having associated a phone based pronunciation. Therefore a syllable (in terms of orthography) according to the current invention is not limited to a syllable in terms of pronunciation. The Arabic suffix "uuna" (masculine, plural) is clearly consisting of 2 syllables (based on Ruske's definition of smallest recognition unit) but represented by 4 phones in the system according to this invention. The recombination of constituents to build words of the language is thus based on characters and not by means of recognition units.

As therefore the proposed technique essentially covers the preprocessing of large corpora (for setting up the new segmented type of vocabulary) and post-processing, i.e. recombination of constituents, these techniques can be applied to any existing decoder without further modifications or enhancements.

It has to be pointed out that the segmentation and recombination approach of the current invention is not used for the recognition of compound words (from other legal words) in clear distinction to other state of the art teaching; instead the teaching allows for storage-efficient realization of vocabularies. The reduced size of segmented vocabularies on the other hand may then be used to again increase the vocabulary for increased recognition and coverage of the language.

### 4.2.1 Limitations of State of the Art Speech Recognition Systems

The current speech recognition system can only handle up to 64k (128k in the very recent version of the IBM ViaVoice 98) pronunciations. This limitation is due to the numbers of bits provided by a certain processor architecture for addressing the storage contents. This means that if a given language has an average of two pronunciations per word, the number of words is often limited to a maximum of 32k (64k in ViaVoice 98) words.

Many languages are characterized by the use of **inflection**; one basic word form can generate several hundreds of word forms. For instance, a relatively small vocabulary of 35k English words can represent more than 99% of the everyday spoken English. A different situation exists for inflected languages that use very large vocabularies. For example, the Russian language requires at least 400k words to represent more than 99% of the everyday spoken Russian language and Arabic requires at least 200k to represent 99% of the everyday spoken Arabic language. Thus, the size of vocabularies in these languages is very large. Such a large vocabulary cannot be used in current real-time speech recognizers for the limitations mentioned above.

In general, highly inflected languages, in addition to possessing a very rich morphology, are also highly combinatorial, in that several hundreds of words can be generated from one core preceded/followed by one or more prefixes/suffixes. Thus, one would expect to achieve a great deal of coverage on handling those language words as a combination of these pieces.

### 4.2.2 Building the Language Model

The traditional building processes of a language model (LM) are depicted in Fig. 2 and comprise the following steps:

1. Collecting corpora that represent the domain where the Speech Recognizer is to be used.
2. Cleaning (e.g. removing the tables and formating information from the text) and tokenization (e.g. convert a sentence like "see you at 14:00." to "see you at 2 o'clock PM .").
3. Select the vocabulary by counting the frequency of occurrence of each word and choosing the top N (where N <=32k) most frequently occurred words.
4. Build the LM by computing the 3-gram counts for those N words.

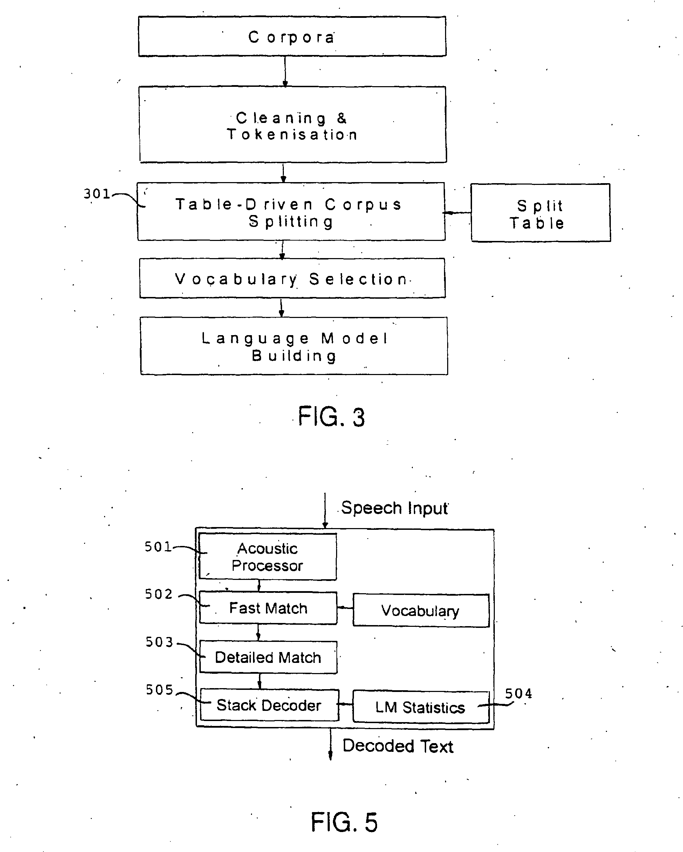

To handle the constituents according to the split-table (comprising a mixture of legal words and actual constituents) the current invention suggests to introduce a further step (301) before the selection of the vocabulary as shown in Fig. 3. Within this new step (301) the splitting information for the words into pieces is applied to the corpora. The new corpora are then used to select the vocabulary of pieces. In this case, the vocabulary will be the top N pieces. Therefore, as the vocabulary consists of legal words and constituents the LM actually is computed based on the sequence statistics of words as well as mixtures of words and constituents (depending on the nature of constituents as defined within the split-table).

### 4.2.3 The Split-Table for a Given Language

The process of getting the split-table is very much dependent on the nature of each language and how its derivatives are formed. If English is chosen as an example (although it is not a highly inflected language), a logical suffix set might be {s,ed,ing,er,ers,ly,...} and a prefix set might be {ab, un, re, pre, ...} (this has to be understood as an example only). However, the current invention goes beyond this. The prefixes/suffixes are not necessarily a linguistic or phonetic known unit of the language but should be chosen to achieve maximum compression ratio of the selected vocabulary (pieces) compared to the number of real valid words that can be generated during recognition, i.e. the current teaching allows to use those constituents resulting in a maximum of compression of the vocabulary. But the prefixes and suffixes set can also be chosen to contain (any) <u>part</u> of compound words or even syllables. In the following example, the split-table is obtained by hand. However, in general, one could use clustering techniques to obtain the table using as starting points e.g. linguistic motivated pieces.

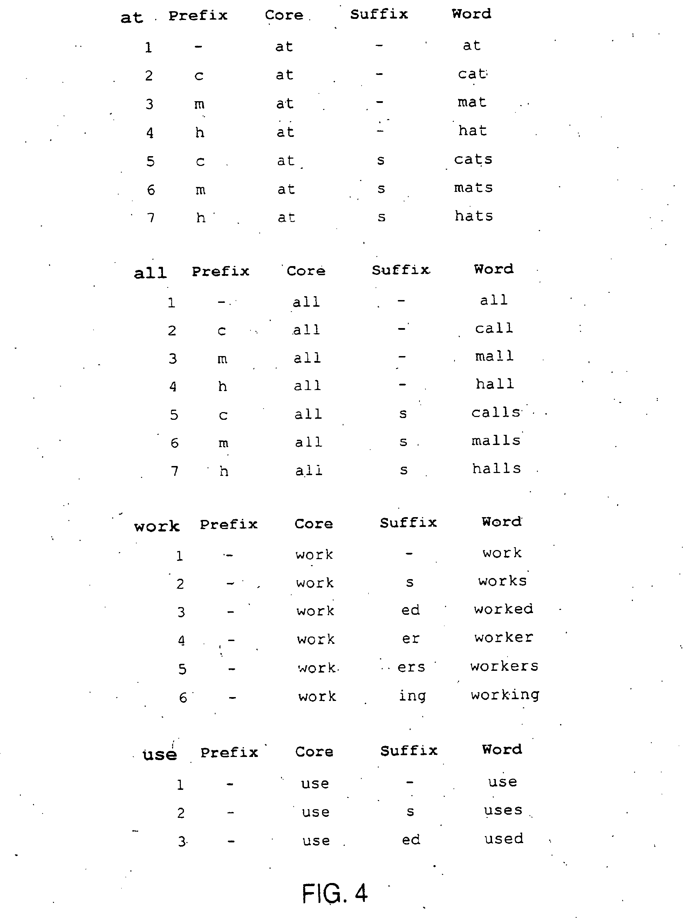

For example, if we choose prefix set as {c,m,h} and suffix set {s,ed,ing,er,ers} for cores like (at, all, work, use), the words of Fig. 4 can be generated.

In the above example, 3 prefixes + 4 cores + 5 suffixes which will occupy 12 vocabulary entries in a recognition system will be able to generate 23 valid English words. This proofs the compression of a vocabulary achievable by the current invention. On the other hand this advantage gives freedom to introduce additional words and constituents to the vocabulary not covered so far and thus increases the spectrum of words recognizable by the speech recognition system.

The following benefits are achievable by the current teaching:

1. Compression of the vocabulary
The invention allows to define and store N words but generate and recognize up to MxN words (where M is language dependent).
2. Smaller vocabularies allow in addition a better estimation of the word (or piece) probabilities (uni-, bi-, tri-grams within their context environment as more occurrences are seen in the respective corpora.
3. Efficient storing via mapping the N words into a set of groups having the same prefix/suffix pattern.
Such approach ensures logical completeness and coverage of the chosen vocabulary. Usually the user who dictates a word defined in the vocabulary expects that all derived forms are also available. For example, one does not expect that the word 'use' is in the vocabulary while 'user' is not.
4. Flexibility of defining the prefix and suffix sets for each language to achieve the best compression.
The prefix/suffix is not necessary a linguistic or phonetic known unit of the language. In the above English example, the prefix set {c,m,h} does not have a linguistic or phonetic definition but has been found to give good compression ration (maximize M) for this set of words.

It is very important to point out that the suffix (or prefix) set can be NULL and therefore a prefix set and a core set can generate the words. Also, the prefix set can be NULL and in this case a suffix set and a core set can generate the words. Actually any type of constituent being part of the segmented vocabulary can be combined with one another to reconstruct legal words of the language.

To illustrate, with an example for the Arabic language, the Arabic word 'wasayaktubuunahaa' ("and they will write it") can be segmented as follows 'wasaya+ktub+uunahaa' (wasaya: "and will", ktub: "write", uunahaa: "they it") The core is 'ktub' to which are attached the prefixes 'wa' ("and"), sa (future tense), ya (3rd person), and the suffixes 'uuna' (masc. pl.) and 'haa' ("it"). The Arabic word 'wasayaktubuunahaa' maps to a complete English sentence: "and they" ((masc.) pl.) "will write it". Arabic is normally written without short vowels and other diacritics that mark gemination, zero vowel, and various inflectional case endings. The word in the above example is normally written 'wsyktbuunhaa'.

Similar segmentations in prefix-core-suffix parts can be applied in languages like German, Czech or Russian or of course any other (highly inflected) language.

### 4.2.4 The Text Post-Processor

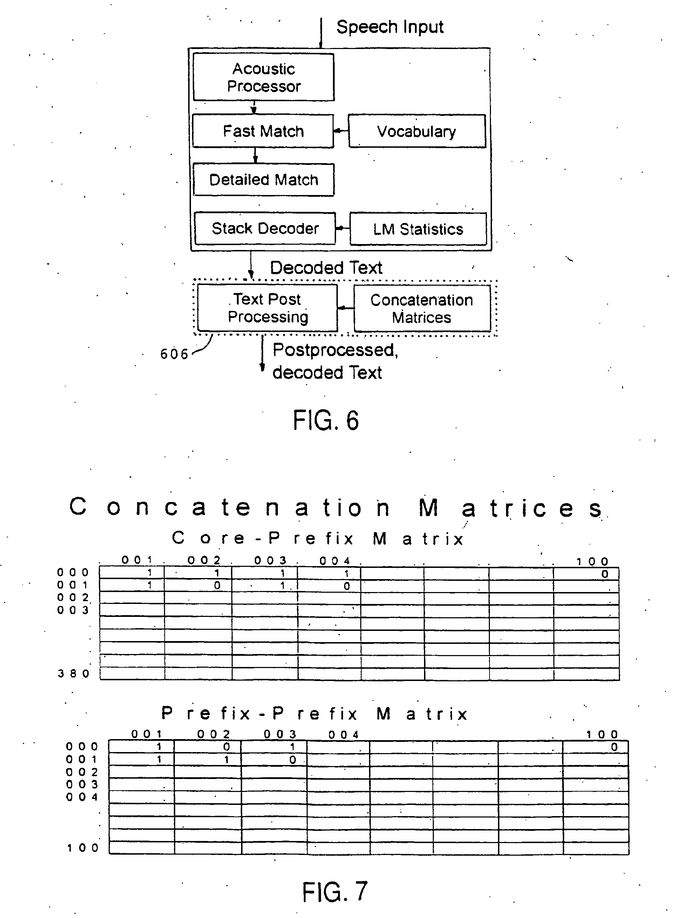

Fig. 5 shows a block diagram of a traditional speech recognizer. The speech signal is first processed by the acoustic processor (501) where digital signal processing features (like energy, cepstrum, ...) are extracted. A fast match (502) technique is implemented to determine a short list of candidate words quickly before performing expensive detailed match (503). The LM (504) is then consulted to determine (505) the corresponding sequence of words. Thus the detailed match technique is applied to promising candidate words only.

In case the vocabulary consists of legal words and/or constituents (or "pieces", i.e. prefixes, cores, suffixes) of legal words or mixtures thereof a post processing step (606) is required as visualized in Figure 6 to concatenate those pieces and display them to the user as valid words. In this invention, a **core-tag table** is generated automatically from the split table. First the split table is sorted by cores and then cores are grouped according to the prefix/suffix set that can be attached to. A **prefix (suffix) tag** is just a number given to each prefix (suffix). Also a **core-prefix matrix** is formed where the element (core_no, prefix_no) denotes if this is a valid concatenation (1) or not (0). Another **prefix-prefix matrix** is also formed for validating the concatenation of two prefixes.

A specific implementation of the current invention relates to an Arabic speech recognition system based on the IBM ViaVoice Gold engine (where the limitation of 64k pronunciations still existed). This implementation was built using the 2-pieces segmentation technique as described above.

A 32k words vocabulary (to be more precise: according to the current invention the entries within the vocabulary comprise a mixture/collection of prefixes and cores and complete legal words of the language) is used to build the LM and the 3-gram counts are collected on the 2-pieces segmented corpora.

The possible pronunciations of each word are collected to build the baseform pool (needed to tell the recognizer how words are pronounced). The baseform pool contains 60k baseforms with an average of 2 pronunciations of each word.

Automatically a **core-tag table** is obtained from the split-table where the 32k words are classified into 380 groups. A core-tag table is a table relating the cores, defined according to the split-table, to a certain range of natural numbers serving unique as indexes for quickly identifying a certain core via its index. It is for instance of the structure: Word=Tag_000, ... Word=Tag_380. Along the same lines a prefix-tag table has been generated assigning another range of natural numbers, serving as unique indexes for the prefixes, to the prefixes. It is for instance of the structure: Prefix=Tag_400, ... Prefix=Tag_500.

As one of the representatives of the constituent combination tables a **core-prefix matrix** of 380x100 entries has been formed of 1's (valid prefixes) and 0's (not valid) to be used during recognition to stop non-valid combinations from appearing on the screen. Figure 7 gives an example of a core-prefix matrix visualizing the row indexes (000-380) as representations of the cores and the column indexes (001-100) as representations of the prefixes while the cells indicate the (in)validity of the specific prefix/core recombination via 0 and 1. Another representative of the constituent combination tables is the **prefix-prefix matrix** of 100x100 entries also visualized in Figure 7. It indicates by 1's (valid prefixes) and 0's (not valid) to be used during recognition to stop non-valid combinations from appearing on the screen recombining two prefixes into a valid third prefix. As also apparent from Figure 7 with respect to the prefix-prefix matrix the row indexes (000-100) and the column indexes (001-100) are the representations of the two prefixes while the cells indicate the (in)validity of the specific prefix/prefix recombination via 0 and 1 into a third prefix.

For this specific implementation of the invention the exploitation of the core-prefix matrix and the prefix-prefix-matrix during the execution of the post-processor (606) is discussed.

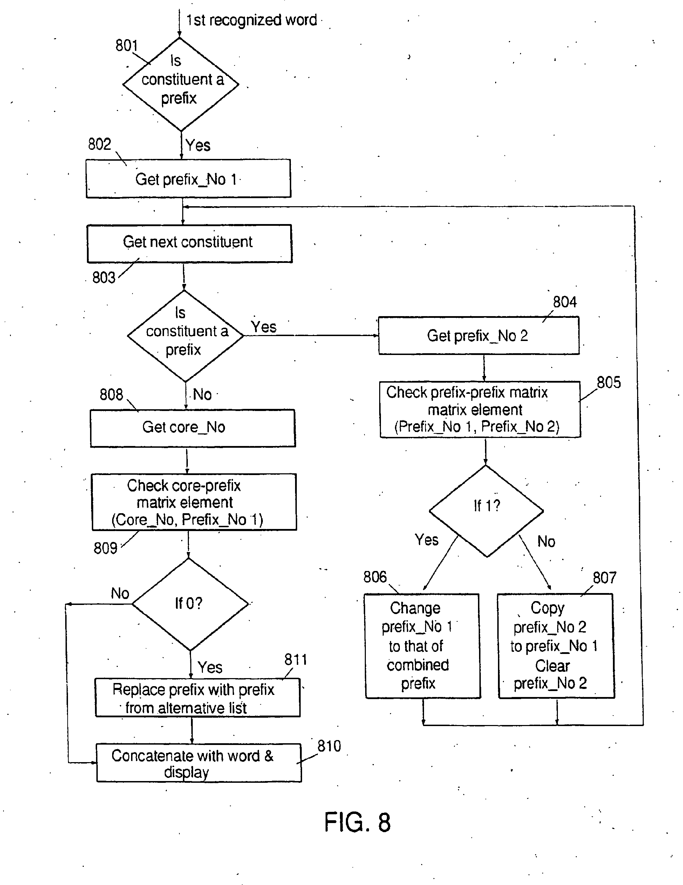

After a constituent is recognized by the speech recognizer, it is processed according to the following logic, which is also visualized by the flow-diagram of Figure 8:

1 If the piece/constituent has a tag in the range from 400-500 (which identifies it as a prefix), subtract 400 to get the PREFIX_NO1 (801, 802)

2 Get the next piece from the recognizer and check:

2.1 If it is a core, get the tag which gives the GROUP_NO (808). Check element (GROUP_NO, PREFIX_NO1) of the core-prefix matrix (809):

2.1.1 If 1, concatenate the prefix and the core and display (810)
2.1.2 If 0, replace the prefix with a valid prefix, concatenate with the core and display. As one possibility said valid prefix might be determined from an **alternative-list** for that prefix. For each recognized word (here a prefix) the decoder could send the best hypothesis as well as the next close matching words. This list could be used as alternative-list to improve the recombination of pieces to words.

2.2 If it is a second prefix, get the PREFIX_NO2 (804), check the prefix-prefix matrix element (PREFIX_NO1, PREFIX_NO2) (805)

2.2.1 If 1, change PREFIX_NO1 to new PREFIX_NO which corresponds to the concatenation of the two prefixes and clear PREFIX_NO2. Get next piece and repeat at step 1 (806)
2.2.2 If 0, copy PREFIX_NO2 to PREFIX_NO1, clear PREFIX_NO2. Get next piece and repeat at step 1 (807)

Based on these embodiments the engine sends the correct prefix subword combination in 95% of the cases.

Above teaching outlined with respect to recombination of prefix with prefix as well as prefix with core can be generalized to recombination of any two constituents. Of course the recombination process operates recursively on creating recombined constituents. I.e. for example two consecutive constituents representing a first prefix-constituent and a second prefix-constituent may be recombining a third prefix-constituent based upon a prefix-prefix-matrix indicating a legal combination in said language, or two consecutive constituents representing a prefix-constituent and a core-constituent may be recombined into a second core-constituent based upon core-prefix-matrix indicating a legal combination in said language, or two consecutive constituents representing a prefix-constituent and a suffix-constituent may be recombined into a second prefix-constituent based upon a prefix-suffix-matrix indicating a legal combination in said language, or two consecutive constituents representing a core-constituent and a suffix-constituent may be recombined into a second core-constituent based upon a core-suffix-matrix indicating a legal combination in said language.

As standard behavior for handling of any two constituents for which the corresponding constituent combination table indicates an illegal combination the two constituents are not recombined and said constituents are treated as separate entries in said language.

Moreover the above example uses matrix technology for implementing the various constituent combination tables. Further improvements may be achieved using sparse-matrix technology for implementing the matrixes.

### 4.2.5 The Coverage of Legal Words of a Language by the Approach of Segmented Vocabularies

In the following the efficiency of the current teaching of segmented vocabularies to increase the coverage of a certain language and decrease the size of the vocabulary at the same time is demonstrated. This is done on the basis of the Arabic language. A comparison is given based on vocabulary size and language coverage according to the state of the art which then is compared to the segmentation approach of vocabularies according to the current teaching.

The state of the art situation is compared to a segmentation approach using 2 constituents, prefix and core, with a corresponding split-table and a core-prefix-matrix.

In addition this situation is compared to a segmentation approach using up to 3 constituents, prefix, core and suffix. The Arabic words are treated as having two or three elements: prefix-core or prefix-core-suffix.

The 3-constituent vocabulary has been set up with 100 prefixes, 200 suffixes and 29000 cores. The 2-constituent vocabulary was formed by concatenating the core and the following suffix of the 3-constituent vocabulary to form a new core, it contains 100 prefixes and 604k cores. Thus the 3-constituent vocabulary was originally of prefix-core-suffix structure and has been transformed into a 2-constituent vocabulary.

A corpus of 100M words (journalism, business correspondence and encyclopedia) has been used to test the coverage and to build the LM.

To show efficiency of the underlying idea of segmentation vocabularies the following steps have been performed:

1. The unique words constituing the corpora are collected.
2. The segmentation experience is reflected into corpora to from a new segmented one.
3. The coverage versus number of words in the segmented vocabulary has been computed.

As the result by segmentation of the original words into 2 pieces or 3 pieces coverage has been significantly increased compared to an unsegmented vocabulary of equal size. The following table shows how 30k constituents (from a 3 pieces segmentation) achieve 99% coverage and 32k constituents (from a 2 pieces segmentation) achieve 97% whereas 200k and 115k original words (non-segmented) are required respectively to achieve the same coverage.

| Coverage | Number | of | Words |
|---|---|---|---|
|  | Before Segmentation - Original Words | After Segmentation - 2 Constituents | After Segmentation - 3 Constituents |
| 99% | 200K | 46K | 30K |
| 97% | 115K | 32K | no need |
| 93% | 46K | no need | no need |

### 5 Acronyms

**LM** Language Model

**Claims**

1.  Speech-recognition-system for recognizing a spoken language, comprising:

    an electronic vocabulary with entries representing legal words of said language and entries representing prefix-constituents, core-constituents and suffix-constituents of such legal words;
    a real time speech recognizer generating input signals for said vocabulary from a continuous speech signal;
    the vocabulary comprising as constituents selected arbitrary sub-components of said legal words according to the orthography; and
    a constituent-combination-table indicating which concatenations of a number of S of said constituents represent legal words in said language ;
    the speech-recognition-system being **characterized by**:

    the number S having the value 2 or 3;

    said vocabulary comprising

    if S is 2, constituents allowing for recombination of legal words from a prefix-constituent and a core-constituent, or from a core-constituent and a suffix-constituent, or from a prefix-constituent and a suffix-constituent, and
    in addition, if S is 3, constituents allowing for recombination of legal words from a prefix-constituent, a core-constituent and a suffix-constituent;

    said constituent-combination-table comprising at least one of the following matrices:

    a core-prefix-matrix indicating, whether a combination of a prefix-constituent and a core-constituent is a legal combination in said language or not;
    a prefix-suffix-matrix indicating, whether a combination of a prefix-constituent and a suffix-constituent is a legal combination in said language or not;
    a prefix-prefix-matrix indicating, whether a combination of a first-prefix-constituent and a second-prefix-constituent is a legal combination in said language building a third-prefix-constituent or not;
    a core-suffix-matrix indicating, whether a combination of a core-constituent and a suffix-constituent is a legal combination in said language or not;

    a post-processor responsive to an input comprising recognized constituents of said vocabulary for recombination of said constituents into legal words of said language exploiting said constituent-combination-table, said post-processor being responsive to two consecutive constituents in at least one of the following ways:

    said post-processor being responsive to two consecutive constituents representing a first prefix-constituent and a second prefix-constituent
    by recombining said first prefix-constituent and said second prefix-constituent into a third prefix-constituent if said prefix-prefix-matrix is indicating said first prefix-constituent and said second prefix-constituent as a legal combination in said language, or
    by dropping said first prefix-constituent if said prefix-prefix-matrix is indicating said first prefix-constituent and said second prefix-constituent as an illegal combination in said language;
    said post-processor being responsive to two consecutive constituents representing a prefix-constituent and a core-constituent
    by recombining said prefix-constituent and said core-constituent into a second core-constituent if said core-prefix-matrix is indicating said prefix-constituent and said core-constituent as a legal combination in said language, or,
    if said core-prefix-matrix is indicating said prefix-constituent and said core-constituent as an illegal combination in said language, by replacing said prefix-constituent with an alternative prefix-constituent and recombining said alternative prefix-constituent and said core-constituent if said core-prefix-matrix is indicating said alternative prefix-constituent and said core-constituent as a legal combination in said language;
    said post-processor being responsive to two consecutive constituents representing a prefix-constituent and a suffix-constituent
    by recombining said prefix-constituent and said suffix-constituent into a second prefix-constituent if said prefix-suffix-matrix is indicating said prefix-constituent and said suffix-constituent as a legal combination in said language;

said post-processor being responsive to two consecutive constituents representing a core-constituent and a suffix-constituent

by recombining said core-constituent and said suffix-constituent into a second core-constituent if said core-suffix-matrix is indicating said core-constituent and said suffix-constituent as a legal combination in said language.

2. Speech-recognition-system according to claim 1 further **characterized**
**by** not recombining two consecutive constituents according to at least one of the following cases:

not recombining said prefix-constituent and said suffix-constituent and treating said prefix-constituent as a separate entry if said prefix-suffix-matrix is indicating said prefix-constituent and said suffix-constituent as an illegal combination in said language;
not recombining said core-constituent and said suffix-constituent and treating said core-constituent as a separate entry if said core-suffix-matrix is indicating said core-constituent and said suffix-constituent as an illegal combination in said language.

3. Speech-recognition-system according to claim 1 further **characterized by**
by said alternative prefix-constituent being retrieved from an alternative-list, said alternative-list comprising alternative prefix-constituents to said prefix-constituents in decreasing matching probability.

4. Speech-recognition-system according to anyone of preceding claims further **characterized by**
said core-constituents, said prefix-constituents and said suffix-constituents are represented by unique numbers forming the indexes of said matrices.

5. Speech-recognition-system according to anyone of receding claims further **characterized by**
comprising a language-model of said language being computed based on the N-gram frequencies of a sequence of N entries of said vocabulary.

6. Speech-recognition-system according to anyone of preceding claims further **characterized by**
using phones as smallest recognition-units.

7. Method executed by a speech-recognition-system for recognizing a spoken language,
said method using an electronic vocabulary with entries representing legal words of said language and entries representing prefix-constituents, core-constituents and suffix-constituents of such legal words, the method comprising the steps of:

an initial vocabulary-building-step;
a transcribing-step using a real time speech recognizer based on said vocabulary transcribing a continuous speech signal into a sequence of entries of said vocabulary; and
a post-processing-step responsive to said sequence of entries of said vocabulary for recombination of said constituents into legal words;

the initial vocabulary-building-step allowing the vocabulary comprising as constituents selected arbitrary sub-components of said legal words according to the orthography; and
said post-processing-step recombining up to S constituents if a constituent-combination-table indicates that said recognized constituents are legal concatenation in said language ;
the method being **characterized by**:

the number S having the value 2 or 3;
said post-processing-step recombining, if S is 2, legal words from a prefix-constituent and a core-constituent, or from a core-constituent and a suffix-constituent, or from a prefix-constituent and a suffix-constituent, and
said post-processing-step recombining in addition, if S is 3, legal words from a prefix-constituent, a core-constituent and a suffix-constituent;

said post-processing-step recombining two consecutive constituents in at least one of the following ways:

said post-processing-step recombining two consecutive constituents representing a first-prefix-constituent and a second-prefix-constituent

by recombining said first prefix-constituent and said second prefix-constituent into a third prefix-constituent if a prefix-prefix-matrix is indicating said first prefix-constituent and said second prefix-constituent as a legal combination in said language, or

by dropping said first prefix-constituent if said prefix-prefix-matrix indicating said first prefix-constituent and said second prefix-constituent as an illegal combination in said language;

said post-processing-step recombining two consecutive constituents representing a prefix-constituent and a core-constituent

by recombining said prefix-constituent and said core-constituent into a second core-constituent if a core-prefix-matrix is indicating said prefix-constituent and said core-constituent as a legal combination in said language, or, if said core-prefix-matrix is indicating said prefix-constituent and said core-constituent as an illegal combination in said language, by replacing said prefix-constituent with an alternative prefix-constituent and recombining said alternative prefix-constituent and said core-constituent if said core-prefix-matrix is indicating said alternative prefix-constituent and said core-constituent as a legal combination in said language;

said post-processing-step recombining two consecutive constituents representing a prefix-constituent and a suffix-constituent

by recombining said prefix-constituent and said suffix-constituent into a second prefix-constituent if a prefix-suffix-matrix is indicating said prefix-constituent and said suffix-constituent as a legal combination in said language;

said post-processing-step recombining two consecutive constituents representing a core-constituent and a suffix-constituent

by recombining said core-constituent and said suffix-constituent into a second core-constituent if a core-suffix-matrix is indicating said core-constituent and said suffix-constituent as a legal combination in said language.

8. Method according to claim 7 further **characterized**
   **by** not recombining two consecutive constituents according to at least one of the following cases:

   not recombining said prefix-constituent and said suffix-constituent and treating said prefix-constituent as a separate entry if said prefix-suffix-matrix is indicating said prefix-constituent and said suffix-constituent as an illegal combination in said language;
   not recombining said core-constituent and said suffix-constituent and treating said core-constituent as a separate entry if said core-suffix-matrix is indicating said core-constituent and said suffix-constituent as an illegal combination in said language.

9. Method according to claim 7 further **characterized**
   **by** said alternative prefix-constituent being retrieved from an alternative-list, said alternative-list comprising alternative prefix-constituents to said prefix-constituents in decreasing matching probability.

10. Method according to anyone of claims 7 to 9 further **characterized by**
    said post-processing-step representing said core-constituents, said prefix-constituents and said suffix-constituents by unique numbers used as indexes of said matrices.

11. Method according to anyone of claims 7 to 10 further **characterized by**
    using a language-model of said language being based on the N-gram frequencies of a sequence of N entries of said vocabulary.

**Patentansprüche**

1. Spracherkennungssystem zur Erkennung einer gesprochenen Sprache, das Folgendes umfasst:

   ein elektronisches Vokabular mit Einträgen, die zulässige Wörter der Sprache darstellen, und Einträgen, die Präfix-Konstituenten, Wortkernkonstituenten und Suffixkonstituenten dieser zulässigen Wörter darstellen;
   einen Echtzeit-Spracherkenner, der aus einem kontinuierlichen Sprachsignal Eingangssignale für das Vokabular generiert;

   wobei das Vokabular ausgewählte beliebige Teilkomponenten der zulässigen Wörter gemäß der Orthographie als Konstituenten umfasst; und

wobei eine Tabelle zur Konstituentenkombination anzeigt, welche Verkettungen einer Anzahl S der Konstituenten zulässige Wörter in der Sprache darstellen;
wobei das Spracherkennungssystem **dadurch gekennzeichnet ist, dass**:

die Anzahl S dem Wert 2 oder 3 entspricht;
das Vokabular Folgendes umfasst:

wenn S gleich 2 ist, Konstituenten, die die Rekombination zulässiger Wörter aus einer Präfixkonstituente und einer Wortkernkonstituente oder aus einer Wortkernkonstituente und einer Suffixkonstituente oder aus einer Präfixkonstituente und einer Suffixkonstituente ermöglichen, und
wenn S gleich 3 ist, darüber hinaus Konstituenten, die eine Rekombination zulässiger Wörter aus einer Präfixkonstituente, einer Wortkernkonstituente und einer Suffixkonstituente ermöglichen;

wobei die Tabelle zur Konstituentenkombination mindestens eine der folgenden Matrizen umfasst:

eine Wortkern-Präfix-Matrix, die anzeigt, ob eine Kombination aus einer Präfixkonstituente und einer Wortkernkonstituente in der Sprache zulässig ist oder nicht;
eine Präfix-Suffix-Matrix, die anzeigt, ob eine Kombination aus einer Präfixkonstituente und einer Suffixkonstituente in der Sprache zulässig ist oder nicht;
eine Präfix-Präfix-Matrix, die anzeigt, ob eine Kombination aus einer ersten Präfixkonstituente und einer zweiten Präfixkonstituente eine zulässige Kombination in der Sprache ist, die eine dritte Präfixkonstituente ergibt oder nicht;
eine Wortkern-Suffix-Matrix, die anzeigt, ob eine Kombination aus einer Wortkernkonstituente und einer Suffixkonstituente in der Sprache zulässig ist oder nicht;

einen Nachprozessor, der auf eine Eingabe reagiert, die erkannte Konstituenten des Vokabulars umfasst, um die Konstituenten unter Nutzung der Tabelle zur Konstituentenkombination zu zulässigen Wörtern der Sprache zu rekombinieren, wobei der Nachprozessor auf zwei aufeinander folgende Konstituenten in mindestens einer der folgenden Weisen reagiert:

der Nachprozessor reagiert auf zwei aufeinander folgende Konstituenten, die eine erste Präfixkonstituente und eine zweite Präfixkonstituente darstellen,
durch Rekombinieren der ersten Präfixkonstituente und der zweiten Präfixkonstituente zu einer dritten Präfixkonstituente, wenn die Präfix-Präfix-Matrix anzeigt, dass die Kombination aus der ersten Präfixkonstituente und der zweiten Präfixkonstituente in der Sprache zulässig ist;
durch Ignorieren der ersten Präfixkonstituente, wenn die Präfix-Präfix-Matrix anzeigt, dass die Kombination aus der ersten Präfixkonstituente und der zweiten Präfixkonstituente in der Sprache unzulässig ist;
der Nachprozessor reagiert auf zwei aufeinander folgende Konstituenten, die eine Präfixkonstituente und eine Wortkernkonstituente darstellen,
durch Rekombinieren der Präfixkonstituente und der Wortkernkonstituente zu einer zweiten Wortkernkonstituente, wenn die Wortkern-Präfix-Matrix anzeigt, dass die Kombination aus der Präfixkonstituente und der Wortkernkonstituente in der Sprache zulässig ist, oder
wenn die Wortkern-Präfix-Matrix anzeigt, dass die Kombination aus der Präfixkonstituente und der Wortkernkonstituente in der Sprache unzulässig ist, durch Ersetzen der Präfixkonstituente durch eine alternative Präfixkonstituente und durch Rekombinieren der alternativen Präfixkonstituente und der Wortkernkonstituente, wenn die Wortkern-Präfix-Matrix anzeigt, dass die Kombination aus der alternativen Präfixkonstituente und der Wortkernkonstituente in der Sprache zulässig ist;
der Nachprozessor reagiert auf zwei aufeinander folgende Konstituenten, die eine Präfixkonstituente und eine Suffixkonstituente darstellen,
durch Rekombinieren der Präfixkonstituente und der Suffixkonstituente zu einer zweiten Präfixkonstituente, wenn die Präfix-Suffix-Matrix anzeigt, dass die Kombination aus der Präfixkonstituente und der Suffixkonstituente in der Sprache zulässig ist; oder
der Nachprozessor reagiert auf zwei aufeinander folgende Konstituenten, die eine Wortkernkonstituente und eine Suffixkonstituente darstellen,
durch Rekombinieren der Wortkernkonstituente und der Suffixkonstituente zu einer zweiten Wortkernkonstituente, wenn die Wortkern-Suffix-Matrix anzeigt, dass die Kombination aus der Wortkernkonstituente und der Suffixkonstituente in der Sprache zulässig ist.

**2.** Spracherkennungssystem nach Anspruch 1, ferner
**gekennzeichnet durch**
kein Rekombinieren zweier aufeinander folgender Konstituenten in mindestens einem der folgenden Fälle:

kein Rekombinieren der Präfixkonstituente und der Suffixkonstituente und Behandeln der Präfixkonstituente als separaten Eintrag, wenn die Präfix-Suffix-Matrix anzeigt, dass die Kombination aus der Präfixkonstituente und der Suffixkonstituente in der Sprache unzulässig ist;
kein Rekombinieren der Wortkernkonstituente und der Suffixkonstituente und Behandeln der Wortkernkonstituente als separaten Eintrag, wenn die Wortkern-Suffix-Matrix anzeigt, dass die Kombination aus der Wortkernkonstituente und der Suffixkonstituente in der Sprache unzulässig ist.

**3.** Spracherkennungssystem nach Anspruch 1, ferner **dadurch gekennzeichnet,**
**dass** die alternative Präfixkonstituente aus einer Alternativenliste abgerufen wird, wobei die Alternativenliste alternative Präfixkonstituenten für die Präfixkonstituenten in der Reihenfolge abnehmender Zuordnungswahrscheinlichkeit umfasst.

**4.** Spracherkennungssystem nach einem der vorhergehenden Ansprüche, ferner **dadurch gekennzeichnet,**
**dass** die Wortkernkonstituenten, die Präfixkonstituenten und die Suffixkonstituenten durch eindeutige Zahlen dargestellt werden, die die Indizes der Matrizen bilden.

**5.** Spracherkennungssystem nach einem der vorhergehenden Ansprüche, ferner **dadurch gekennzeichnet,**
**dass** es ein Sprachmodell der Sprache umfasst, das anhand der N-Gramm-Häufigkeiten einer Abfolge von N Einträgen des Vokabulars berechnet wird.

**6.** Spracherkennungssystem nach einem der vorhergehenden Ansprüche, ferner **dadurch gekennzeichnet,**
**dass** es Phoneme als kleinste Erkennungseinheiten verwendet.

**7.** Verfahren zur Erkennung einer gesprochenen Sprache, das von einem Spracherkennungssystem ausgeführt wird, wobei das Verfahren ein elektronisches Vokabular mit Einträgen, die zulässige Wörter der Sprache darstellen, und Einträgen, die Präfix-Konstituenten, Wortkernkonstituenten und Suffixkonstituenten dieser zulässigen Wörter darstellen, verwendet,
und wobei das Verfahren folgende Schritte umfasst:

einen ersten Schritt der Vokabularerstellung;
einen Transkriptionsschritt, in dem mithilfe eines Echtzeit-Spracherkenners auf der Grundlage des Vokabulars ein kontinuierliches Sprachsignal in eine Abfolge von Einträgen aus dem Vokabular transkribiert wird; und
einen auf die Abfolge von Einträgen aus dem Vokabular reagierenden Nachverarbeitungsschritt zur Rekombination der Konstituenten zu zulässigen Wörtern;

wobei der erste Schritt der Vokabularerstellung ermöglicht, dass das Vokabular ausgewählte beliebige Teilkomponenten der zulässigen Wörter gemäß der Orthographie als Konstituenten umfasst; und
wobei der Nachverarbeitungsprozess bis zu S Konstituenten rekombiniert, wenn eine Tabelle zur Konstituentenkombination anzeigt, dass die erkannten Konstituenten eine zulässige Verkettung in der Sprache darstellen;
wobei das Verfahren **dadurch gekennzeichnet ist,**
**dass** die Anzahl S dem Wert 2 oder 3 entspricht;
**dass** der Nachverarbeitungsprozess, wenn S gleich 2 ist, zulässige Wörter aus einer Präfixkonstituente und einer Wortkernkonstituente oder aus einer Wortkernkonstituente und einer Suffixkonstituente oder aus einer Präfixkonstituente und einer Suffixkonstituente rekombiniert; und
**dass** der Nachverarbeitungsprozess, wenn S gleich 3 ist, außerdem zulässige Wörter aus einer Präfixkonstituente, einer Wortkernkonstituente und einer Suffixkonstituente rekombiniert;
wobei der Nachverarbeitungsschritt zwei aufeinander folgende Konstituenten in mindestens einer der folgenden Weisen rekombiniert:

der Nachverarbeitungsschritt rekombiniert zwei aufeinander folgende Konstituenten, die eine erste Präfixkonstituente und eine zweite Präfixkonstituente darstellen,
durch Rekombinieren der ersten Präfixkonstituente und der zweiten Präfixkonstituente zu einer dritten Präfixkonstituente, wenn eine Präfix-Präfix-Matrix anzeigt, dass die Kombination aus der ersten Präfixkonstituente und der zweiten Präfixkonstituente in der Sprache zulässig ist, oder

durch Ignorieren der ersten Präfixkonstituente, wenn die Präfix-Präfix-Matrix anzeigt, dass die Kombination aus der ersten Präfixkonstituente und der zweiten Präfixkonstituente in der Sprache unzulässig ist;
der Nachverarbeitungsschritt rekombiniert zwei aufeinander folgende Konstituenten, die eine Präfixkonstituente und eine Wortkernkonstituente darstellen,
durch Rekombinieren der Präfixkonstituente und der Wortkernkonstituente zu einer zweiten Wortkernkonstituente, wenn eine Wortkern-Präfix-Matrix anzeigt, dass die Kombination aus der Präfixkonstituente und der Wortkernkonstituente in der Sprache zulässig ist, oder
wenn die Wortkern-Präfix-Matrix anzeigt, dass die Kombination aus der Präfixkonstituente und der Wortkernkonstituente in der Sprache unzulässig ist, durch Ersetzen der Präfixkonstituente durch eine alternative Präfixkonstituente und durch Rekombinieren der alternativen Präfixkonstituente und der Wortkernkonstituente, wenn die Wortkern-Präfix-Matrix anzeigt, dass die Kombination aus der alternativen Präfixkonstituente und der Wortkernkonstituente in der Sprache zulässig ist;
der Nachverarbeitungsschritt rekombiniert zwei aufeinander folgende Konstituenten, die eine Präfixkonstituente und eine Suffixkonstituente darstellen,
durch Rekombinieren der Präfixkonstituente und der Suffixkonstituente zu einer zweiten Präfixkonstituente, wenn eine Präfix-Suffix-Matrix anzeigt, dass die Kombination aus der Präfixkonstituente und der Suffixkonstituente in der Sprache zulässig ist;
der Nachverarbeitungsschritt rekombiniert zwei aufeinander folgende Konstituenten, die eine Wortkernkonstituente und eine Suffixkonstituente darstellen,
durch Rekombinieren der Wortkernkonstituente und der Suffixkonstituente zu einer zweiten Wortkernkonstituente, wenn eine Wortkern-Suffix-Matrix anzeigt, dass die Kombination aus der Wortkernkonstituente und der Suffixkonstituente in der Sprache zulässig ist.

8. Verfahren nach Anspruch 7, das ferner **gekennzeichnet ist durch**
   kein Rekombinieren zweier aufeinander folgender Konstituenten in mindestens einem der folgenden Fälle:

   kein Rekombinieren der Präfixkonstituente und der Suffixkonstituente und Behandeln der Präfixkonstituente als separaten Eintrag, wenn die Präfix-Suffix-Matrix anzeigt, dass die Kombination aus der Präfixkonstituente und der Suffixkonstituente in der Sprache unzulässig ist;
   kein Rekombinieren der Wortkernkonstituente und der Suffixkonstituente und Behandeln der Wortkernkonstituente als separaten Eintrag, wenn die Wortkern-Suffix-Matrix anzeigt, dass die Kombination aus der Wortkernkonstituente und der Suffixkonstituente in der Sprache unzulässig ist.

9. Verfahren nach Anspruch 7, das ferner **dadurch gekennzeichnet ist,**
   **dass** die alternative Präfixkonstituente aus einer Alternativenliste abgerufen wird, wobei die Alternativenliste alternative Präfixkonstituenten für die Präfixkonstituenten in der Reihenfolge abnehmender Zuordnungswahrscheinlichkeit umfasst.

10. Verfahren nach einem der Ansprüche 7 bis 9, das ferner **dadurch gekennzeichnet ist,**
    **dass** der Nachverarbeitungsschritt die Wortkernkonstituenten, die Präfixkonstituenten und die Suffixkonstituenten durch eindeutige Zahlen darstellt, die als Indizes der Matrizen dienen.

11. Verfahren nach einem der Ansprüche 7 bis 10, das ferner **dadurch gekennzeichnet ist,**
    **dass** ein Sprachmodell der Sprache verwendet wird, das anhand der N-Gramm-Häufigkeiten einer Abfolge von N Einträgen des Vokabulars berechnet wird.

## Revendications

1. Système de reconnaissance de la parole destiné à reconnaître une langue parlée, comprenant :

   un vocabulaire électronique comportant des entrées représentant des mots admis de ladite langue et des entrées représentant des constituants de type préfixe, des constituants de type racine et des constituants de type suffixe de tels mots admis,
   un module de reconnaissance de la parole en temps réel générant des signaux d'entrées pour ledit vocabulaire à partir d'un signal vocal continu,

le vocabulaire comprenant en tant que constituants sélectionnés des sous-composants arbitraires desdits mots admis conformément à l'orthographe, et

une table de combinaison de constituants indiquant quelles concaténations d'un nombre S desdits constituants représentent des mots admis dans ladite langue,

le système de reconnaissance de la parole étant **caractérisé par** :

le nombre S qui a la valeur de 2 ou 3,

ledit vocabulaire comprenant

si S vaut 2, des constituants permettant la recombinaison de mots admis à partir d'un constituant de type préfixe et d'un constituant de type racine, ou à partir d'un constituant de type racine et d'un constituant de type suffixe, ou à partir d'un constituant de type préfixe et d'un constituant de type suffixe, et

en outre, si S vaut 3, des constituants permettant une recombinaison de mots admis à partir d'un constituant du type préfixe, d'un constituant du type racine et d'un constituant de type suffixe,

ladite table de combinaison de constituants comprenant au moins l'une des matrices suivantes:

une matrice racine-préfixe indiquant si une combinaison d'un constituant de type préfixe et d'un constituant de type racine est ou non une combinaison admise dans ladite langue,

une matrice préfixe-suffixe indiquant si une combinaison d'un constituant de type préfixe et d'un constituant de type suffixe est ou non une combinaison admise dans ladite langue ou non,

une matrice préfixe-préfixe indiquant si une combinaison d'un premier constituant de type préfixe et d'un deuxième constituant de type préfixe est ou non une combinaison admise dans ladite langue en construisant un troisième constituant de type préfixe,

une matrice racine-suffixe indiquant si une combinaison d'un constituant de type racine et d'un constituant de type suffixe est ou non une combinaison admise dans ladite langue,

un post-processeur répondant à une entrée comprenant des constituants reconnus dudit vocabulaire pour une recombinaison desdits constituants en mots admis de ladite langue en exploitant ladite table de combinaison de constituants, ledit post-processeur répondant à deux constituants consécutifs selon au moins l'une des manières suivantes :

ledit post-processeur répondant à deux constituants consécutifs représentant un premier constituant de type préfixe et un second constituant de type préfixe

en recombinant ledit premier constituant de type préfixe et ledit deuxième constituant de type préfixe en un troisième constituant de type préfixe si ladite matrice préfixe-préfixe indique que ledit premier constituant de type préfixe et ledit deuxième constituant de type préfixe en tant que combinaison admise dans ladite langue, ou

en abandonnant ledit premier constituant de type préfixe si ladite matrice préfixe-préfixe indique que ledit premier constituant de type préfixe et ledit deuxième constituant de type préfixe en tant que combinaison non admise par ladite langue,

ledit post-processeur répondant à deux constituants consécutifs représentant un constituant de type préfixe et un constituant de type racine

en recombinant ledit constituant de type préfixe et ledit constituant de type racine dans un deuxième constituant de type racine si ladite matrice racine-préfixe indique ledit constituant de type préfixe et ledit constituant de type racine en tant que combinaison admise dans ladite langue, ou

si ladite matrice racine-préfixe indique ledit constituant de type préfixe et ledit constituant de type racine comme étant une combinaison non admise dans ladite langue, en remplaçant ledit constituant de type préfixe par un autre constituant de type préfixe et en recombinant ledit autre constituant de type préfixe et ledit constituant de type racine si ladite matrice racine-préfixe indique ledit autre constituant de type préfixe et ledit constituant de type racine en tant que combinaison admise dans ladite langue,

ledit post-processeur répondant à deux constituants consécutifs représentant un constituant de type préfixe et un constituant de type suffixe

en recombinant ledit constituant de type préfixe et ledit constituant de type suffixe en un deuxième constituant de type préfixe si ladite matrice préfixe-suffixe indique ledit constituant de type préfixe et ledit constituant de type suffixe en tant que combinaison admise dans ladite langue,

ledit post-processeur répondant à deux constituants consécutifs représentant un constituant de type racine et un constituant de type suffixe

en recombinant ledit constituant de type racine et ledit constituant de type suffixe en un deuxième constituant de type racine si ladite matrice racine-suffixe indique ledit constituant de type racine et ledit constituant de type suffixe en tant que combinaison admise dans ladite langue,

**2.** Système de reconnaissance de la parole selon la revendication 1, **caractérisé en outre par** le fait:

de ne pas recombiner deux constituants consécutifs selon au moins l'un des cas suivants :

le fait de ne pas recombiner ledit constituant de type préfixe et ledit constituant de type suffixe et de traiter ledit constituant de type préfixe en tant qu'entrée séparée si ladite matrice préfixe-suffixe indique ledit constituant de type préfixe et ledit constituant de type suffixe en tant que combinaison non admise dans ladite langue,

le fait de ne pas recombiner ledit constituant de type racine et ledit constituant de type suffixe et de traiter ledit constituant de type racine en tant qu'entrée séparée si ladite matrice racine-suffixe indique ledit constituant de type racine et ledit constituant de type suffixe en tant que combinaison non admise dans ladite langue.

**3.** Système de reconnaissance de la parole selon la revendication 1, **caractérisé en outre par le fait que** ledit autre constituant de type préfixe est récupéré auprès d'une liste de choix, ladite liste de choix comprenant d'autres constituants de type préfixe pour lesdits constituants de type préfixe par probabilité de concordance décroissante.

**4.** Système de reconnaissance de la parole selon l'une quelconque des revendications précédentes, **caractérisé en outre par le fait que** :

lesdits constituants de type racine, lesdits constituants de type préfixe et lesdits constituants de type suffixe sont représentés par des numéros uniques formant les indices desdites matrices.

**5.** Système de reconnaissance de la parole selon l'une quelconque des revendications précédentes, **caractérisé en outre par** le fait de comprendre un modèle de langue de ladite langue qui est calculé sur la base des fréquences de N-grammes d'une séquence de N entrées dudit vocabulaire.

**6.** Système de reconnaissance de la parole selon l'une quelconque des revendications précédentes, **caractérisé en outre par** le fait d'utiliser des téléphones en tant qu'unités de reconnaissance les plus petites.

**7.** Procédé exécuté par un système de reconnaissance de la parole pour reconnaître une langue parlée, ledit procédé comprenant un vocabulaire électronique comportant des entrées représentant des mots admis de ladite langue et des entrées représentant des constituants de type préfixe, des constituants de type racine et des constituants de type suffixe de tels mots admis, le procédé comprenant les étapes consistant en :

une étape initiale de construction du vocabulaire, une étape de transcription utilisant un module de reconnaissance de la parole en temps réel fondée sur le fait que ledit vocabulaire transcrit un signal de parole continu en une séquence d'entrées dudit vocabulaire, et une étape de post-traitement répondant à ladite séquence d'entrées dudit vocabulaire pour une recombinaison desdits constituants en mots admis, l'étape initiale de construction du vocabulaire permettant le vocabulaire comprenant en temps que constituants sélectionnés des sous-composants arbitraires desdits mots admis conformément à l'orthographe, et ladite étape de post-traitement recombinant jusqu'à S constituants si une table de combinaison de constituants indique que lesdits constituants reconnus sont une concaténation admise dans ladite langue,

le procédé étant **caractérisé par:**

**le fait que** le nombre S a la valeur de 2 ou de 3,
**le fait que** ladite étape de post-traitement recombine, si S est égal à 2, des mots admis à partir d'un constituant de type préfixe et d'un constituant de type racine, ou à partir d'un constituant de type racine et d'un constituant de type préfixe, ou à partir d'un constituant de type préfixe et d'un constituant de type suffixe, et **le fait que** ladite étape de post-traitement recombine en outre, si S vaut 3, des mots admis à partir d'un constituant de type préfixe, d'un constituant de type racine et d'un constituant de type suffixe,

ladite étape de post-traitement recombinant deux constituants consécutifs selon au moins l'une des manières suivantes :

ladite étape de post-traitement recombinant deux constituants consécutifs représentant un premier constituant de type préfixe et un deuxième constituant de type préfixe

en recombinant ledit premier constituant de type préfixe et ledit deuxième constituant de type préfixe en un troisième constituant de type préfixe si une matrice préfixe-préfixe indique ledit premier constituant de type préfixe et ledit deuxième constituant de type préfixe en tant que combinaison admise dans ladite langue, ou en abandonnant ledit premier constituant de type préfixe si ladite matrice préfixe-préfixe indique que ledit premier constituant de type préfixe et ledit deuxième constituant de type préfixe en tant que combinaison non admise dans ladite langue,

ladite étape de post-processeur recombinant deux constituants consécutifs représentant un constituant de type préfixe et un constituant de type racine

en recombinant ledit constituant de type préfixe et ledit constituant de type racine en un second constituant du type racine si une matrice racine-préfixe indique ledit constituant de type préfixe et ledit constituant de type racine en tant que combinaison admise dans ladite langue, ou

si ladite matrice racine-préfixe indique ledit constituant de type préfixe et ledit constituant de type racine en tant que combinaison non admise dans ladite langue, en remplaçant ledit constituant de type préfixe par un autre constituant de type préfixe et en recombinant ledit autre constituant de type préfixe et ledit constituant de type racine si ladite matrice racine-préfixe indique ledit autre constituant de type préfixe et ledit constituant de type racine en tant que combinaison admise dans ladite langue,

ladite étape de post-traitement recombinant deux constituants consécutifs représentant un constituant de type préfixe et un constituant de type suffixe

en recombinant ledit constituant de type préfixe et ledit constituant de type suffixe en un deuxième constituant de type préfixe si une matrice préfixe-suffixe indique ledit constituant de type préfixe et ledit constituant de type suffixe en tant que combinaison admise dans ladite langue,

ladite étape de post-traitement recombinant deux constituants consécutifs représentant un constituant de type racine et un constituant de type suffixe

en recombinant ledit constituant de type racine et ledit constituant de type suffixe en un deuxième constituant de type racine si une matrice racine-suffixe indique ledit constituant de type racine et ledit constituant de type suffixe une combinaison admise dans ladite langue,

8. Procédé selon la revendication 7, **caractérisé en outre**
**par** le fait de ne pas recombiner deux constituants consécutifs conformément au moins l'un des cas suivants :

le fait de ne pas recombiner ledit constituant de type préfixe et ledit constituant de type suffixe et de traiter ledit constituant de type préfixe en tant qu'entrée séparée si ladite matrice préfixe-suffixe indique ledit constituant de type préfixe et ledit constituant de type suffixe en tant que combinaison non admise dans ladite langue,
le fait de ne pas recombiner ledit constituant de type racine et ledit constituant de type suffixe et de traiter ledit constituant de type racine en tant qu'entrée séparée si ladite matrice racine-suffixe indique ledit constituant de type racine et ledit constituant de type suffixe comme étant une combinaison non admise dans ladite langue.

9. Procédé selon la revendication 7, **caractérisé en outre**
**par le fait que** ledit autre constituant de type suffixe est récupéré à partir d'une liste de choix, ladite liste de choix comprenant d'autres constituants de type préfixe pour lesdits constituants de type préfixe selon la probabilité de concordance décroissante.

10. Procédé selon l'une quelconque des revendications 7 à 9, **caractérisé en outre par**
**le fait que** ladite étape de post-traitement représente lesdits constituants de type racine, lesdits constituants de type préfixe et lesdits constituants de type suffixe par des numéros uniques utilisés comme indices desdites matrices.

11. Procédé selon l'une quelconque des revendications 7 à 10, **caractérisé en outre par**
le fait d'utiliser un modèle de ladite langue qui est fondé sur les fréquences de N-grammes d'une séquence de N

entrées dudit vocabulaire.

## Word = Prefix Core Suffix

Split-Table: 3 Pieces

## Word = Prefix Core

Split-Table: 2 Pieces

FIG. 1

Corpora

↓

Cleaning &
Tokenisation

↓

Vocabulary
Selection

↓

Language Model
Building

FIG. 2

```
                    ┌──────────────────────────┐
                    │        C o r p o r a      │
                    └──────────────────────────┘
                                 │
                                 ▼
                    ┌──────────────────────────┐
                    │        C l e a n i n g  & │
                    │      T o k e n i s a t i o n │
                    └──────────────────────────┘
                                 │
                                 ▼
        301    ┌──────────────────────────┐        ┌──────────────┐
          ─────│  T a b l e - D r i v e n  C o r p u s │◄────│   S p l i t   │
               │        S p l i t t i n g │        │   T a b l e  │
               └──────────────────────────┘        └──────────────┘
                                 │
                                 ▼
                    ┌──────────────────────────┐
                    │  V o c a b u l a r y  S e l e c t i o n │
                    └──────────────────────────┘
                                 │
                                 ▼
                    ┌──────────────────────────┐
                    │  L a n g u a g e  M o d e l │
                    │        B u i l d i n g    │
                    └──────────────────────────┘
```

## FIG. 3

Speech Input

```
              ┌──────────────────────────────────────────┐
    501 ──────│  ┌──────────────┐                         │
              │  │   Acoustic   │                         │
              │  │  Processor   │                         │
              │  └──────────────┘                         │
              │         │                                 │
    502 ──────│  ┌──────────────┐     ┌──────────────┐    │
              │  │  Fast Match  │────│   Vocabulary  │    │
              │  └──────────────┘     └──────────────┘    │
              │         │                                 │
    503 ──────│  ┌──────────────┐                         │
              │  │ Detailed Match│                        │
              │  └──────────────┘                         │
              │         │                                 │
    505 ──────│  ┌──────────────┐     ┌──────────────┐    │
              │  │ Stack Decoder│────│  LM Statistics│────│ 504
              │  └──────────────┘     └──────────────┘    │
              └──────────────────────────────────────────┘
```

Decoded Text

## FIG. 5

| at | Prefix | Core | Suffix | Word |
|---|---|---|---|---|
| 1 | – | at | – | at |
| 2 | c | at | – | cat |
| 3 | m | at | – | mat |
| 4 | h | at | – | hat |
| 5 | c | at | s | cats |
| 6 | m | at | s | mats |
| 7 | h | at | s | hats |

| all | Prefix | Core | Suffix | Word |
|---|---|---|---|---|
| 1 | – | all | – | all |
| 2 | c | all | – | call |
| 3 | m | all | – | mall |
| 4 | h | all | – | hall |
| 5 | c | all | s | calls |
| 6 | m | all | s | malls |
| 7 | h | all | s | halls |

| work | Prefix | Core | Suffix | Word |
|---|---|---|---|---|
| 1 | – | work | – | work |
| 2 | – | work | s | works |
| 3 | – | work | ed | worked |
| 4 | – | work | er | worker |
| 5 | – | work | ers | workers |
| 6 | – | work | ing | working |

| use | Prefix | Core | Suffix | Word |
|---|---|---|---|---|
| 1 | – | use | – | use |
| 2 | – | use | s | uses |
| 3 | – | use | ed | used |

FIG. 4

Speech Input

Acoustic Processor

Fast Match ← Vocabulary

Detailed Match

Stack Decoder ← LM Statistics

Decoded Text

Text Post Processing ← Concatenation Matrices

606

Postprocessed, decoded Text

## FIG. 6

## Concatenation Matrices

### Core-Prefix Matrix

| | 001 | 002 | 003 | 004 | | | | 100 |
|-----|-----|-----|-----|-----|---|---|---|-----|
| 0 0 0 | 1 | 1 | 1 | 1 | | | | 0 |
| 0 0 1 | 1 | 0 | 1 | 0 | | | | |
| 0 0 2 | | | | | | | | |
| 0 0 3 | | | | | | | | |
| | | | | | | | | |
| | | | | | | | | |
| | | | | | | | | |
| | | | | | | | | |
| 3 8 0 | | | | | | | | |

### Prefix-Prefix Matrix

| | 001 | 002 | 003 | 004 | | | | 100 |
|-----|-----|-----|-----|-----|---|---|---|-----|
| 0 0 0 | 1 | 0 | 1 | | | | | 0 |
| 0 0 1 | 1 | 1 | 0 | | | | | |
| 0 0 2 | | | | | | | | |
| 0 0 3 | | | | | | | | |
| 0 0 4 | | | | | | | | |
| | | | | | | | | |
| | | | | | | | | |
| | | | | | | | | |
| 1 0 0 | | | | | | | | |

## FIG. 7

1st recognized word

801 **Is constituent a prefix**

|Yes

802 **Get prefix_No 1**

**Get next constituent**

803

**Is constituent a prefix** — Yes → 804 **Get prefix_No 2**

805 **Check prefix-prefix matrix matrix element (Prefix_No 1, Prefix_No 2)**

**If 1?**

Yes — 806 **Change prefix_No 1 to that of combined prefix**

No — 807 **Copy prefix_No 2 to prefix_No 1 Clear prefix_No 2**

No (from Is constituent a prefix)

808 **Get core_No**

809 **Check core-prefix matrix element (Core_No, Prefix_No 1)**

**If 0?**

No →

Yes

811 **Replace prefix with prefix from alternative list**

810 **Concatenate with word & display**

# FIG. 8

25

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- DE 19510083 C2
- US 5754972 A

- DE 19721198 A1

### Non-patent literature cited in the description

- VoiceType: A Multi-Lingual, Large Vocabulary Speech Recognition System for a PC. **S. KUNZ-MANN.** Proceedings of the 2nd SQEL Workshop, Pilsen. 27 April 1997
- **G. RUSKE.** Half words as processing units in automatic speech recognition. *Journal ''Sprache und Datenverarbeitung,* 1984, vol. 8, 5-16

- Using morphology towards better large-vocabulary speech recognition systems. *Proceedings of the International Conference on Acoustics, Speech, and Signal Processing (ICASSP), US, New York, IEEE,* 09 May 1995, 445-448